# EUROPÄISCHE PATENTANMELDUNG

(11) **EP 4 607 025 A1**
(43) Veröffentlichungstag der Anmeldung: **27.08.2025**
(21) Anmeldenummer: 24159231.0
(22) Anmeldetag: 22.02.2024
(51) Int. Cl.: F03D 80/50, F03D 80/70

(54) **VERFAHREN ZUR ÜBERPRÜFUNG EINER SCHMIEREINHEIT IN EINER WINDENERGIEANLAGE**

(71) Anmelder: Wobben Properties GmbH, 26607 Aurich (DE)
(72) Erfinder: Künkler, Niclas, 56472 Hof (DE); Dede, Jan, 27449 Mulsum (DE)
(74) Vertreter: Eisenführ Speiser

(57) **Zusammenfassung**

Es wird ein Verfahren zur Überprüfung einer Schmiereinheit (200) in einer Windenergieanlage (100) vorgesehen, wobei die Windenergieanlage (100) mindestens eine zu schmierende Komponente (150) und eine Schmiereinheit (200) zum Schmieren der zu schmierenden Komponente (150) aufweist. Die Schmiereinheit (200) weist eine Pumpe (210) und ein Ventil (220) aufweist. Ein Testgerät (300) wird mit einem Pumpenanschluss (341) für die Pumpe (210) und einem Ventilanschluss (361) für das Ventil (220) vorgesehen. Der Pumpenanschluss (341) wird an die Pumpe (210) zur Steuerung der Pumpe (210) durch das Testgerät (300) angeschlossen. Der Ventilanschluss (361) wird an das Ventil (220) zur Steuerung des Ventils (220) durch das Testgerät (300) angeschlossen. Die Pumpe (210) und/oder des Ventils (220) wird mittels des Testgerätes (300) zur Überprüfung der Schmiereinheit (200) gesteuert.

## Beschreibung

Die vorliegende Erfindung betrifft ein Verfahren zur Überprüfung einer Schmiereinheit in einer Windenergieanlage.

Eine Windenergieanlage weist eine Mehrzahl von zu schmierenden Komponenten sowie entsprechende Schmiereinheiten auf. Derartige zu schmierende Komponenten sind beispielsweise Lager oder Getriebe.

Es ist eine Aufgabe der vorliegenden Erfindung, ein Verfahren zur Überprüfung einer Schmiereinheit einer Windenergieanlage vorzusehen, welche kostengünstig und effizient durchführbar ist.

Diese Aufgabe wird durch ein Verfahren zur Überprüfung einer Schmiereinheit einer Windenergieanlage nach Anspruch 1 gelöst.

Damit betrifft die vorliegende Erfindung ein Verfahren zur Überprüfung einer Schmiereinheit in einer Windenergieanlage. Die Windenergieanlage weist mindestens eine zu schmierende Komponente und eine Schmiereinheit auf, welche eine Pumpe und ein Ventil aufweist, um Schmiermittel zu der zu schmierenden Komponente zu befördern. Ein Testgerät mit einem Pumpenanschluss für die Pumpe und einem Ventilanschluss für das Ventil der Schmiereinheit wird vorgesehen. Der Pumpenanschluss des Testgerätes wird an die Pumpe zur Steuerung der Pumpe durch das Testgerät und der Ventilanschluss wird an das Ventil zur Steuerung des Ventils durch das Testgerät angeschlossen. Die Pumpe und/oder das Magnetventil wird dann mittels des Testgerätes gesteuert bzw. aktiviert oder deaktiviert.

Gemäß einem Aspekt der vorliegenden Erfindung weist das Testgerät mindestens ein erstes und ein zweites Betätigungselement (z. B. einen Schalter) zum Steuern des Pumpenanschlusses und/oder zum Steuern des Ventilanschlusses auf. Das Testgerät weist einen Anschluss für die Stromversorgung, einen Pumpenanschluss und einen Ventilanschluss auf. Ferner weist das Testgerät ein Betätigungselement (Schalter) zum Ein- und Ausschalten des Testgerätes auf. Durch die Schalter kann das Testgerät eine Pumpe an dem Pumpenanschluss oder ein Ventil an dem Ventilanschluss aktivieren. Wenn dann die Pumpe der Schmiereinheit und das Ventil der Schmiereinheit an dem Pumpenanschluss und dem Ventilanschluss angeschlossen ist und die Schalter entsprechend betätigt werden, dann wird die Pumpe und das Ventil durch das Testgerät mit Spannung versorgt. Damit kann die Pumpe aktiviert werden und der Betrieb der Schmiereinheit kann überprüft werden.

Zur Überprüfung des Betriebs der Pumpeneinheit kann ein Manometer (ein Druckmessgerät) in dem Hydraulikkreis vorgesehen werden. Wenn die Pumpe aktiviert ist, dann kann der Druck mittels des Manometers überprüft werden.

Zur Überprüfung der Schmiereinheit kann eine Überprüfung des Anschaltdrucks durchgeführt werden. Hierbei kann die Pumpe der Schmiereinheit an dem Pumpenanschluss des Testgerätes angeschlossen werden. Anschließend kann die Pumpe über den Pumpenanschluss aktiviert werden. Es wird überprüft, ob der Motor der Pumpe läuft. Wenn dies nicht der Fall ist, dann ist der Motor bzw. die Pumpe auszutauschen. Wenn dies der Fall ist, dann werden die Pumpenelemente überprüft. Wenn diese nicht in Ordnung sind, sind sie auszutauschen. Wenn durch das Manometer erfasst wird, dass Druck in der Schmierleitung der Schmiereinheit aufgebaut wird, dann kann die Überprüfung der Pumpe abgeschlossen werden. Wenn dies jedoch nicht der Fall ist, dann muss überprüft werden, ob Luft in dem Vorratsbehälter für das Schmiermittel vorhanden ist. Wenn Luft in dem Vorratsbehälter vorhanden ist, dann ist der Vorratsbehälter zu entlüften. Wenn dies nicht der Fall ist, dann ist der Magnetschalter des Wegeventils zu prüfen. Wenn der Magnetschalter nicht in Ordnung ist, dann ist das Ventil zu tauschen. Wenn der Magnetschalter jedoch in Ordnung sind, dann kann überprüft werden, ob eine Störmeldung vorhanden ist. Wenn dies der Fall ist, dann muss das System überprüft werden. Wenn keine Störmeldung vorhanden ist, dann ist die Überprüfung des Druckes beendet.

Alternativ dazu kann zur Überprüfung der Schmiereinheit kann eine Überprüfung des Anschaltdruckes durchgeführt werden. Hierbei kann die Pumpe der Schmiereinheit an dem Pumpenanschluss des Testgerätes angeschlossen werden. Anschließend kann die Pumpe über den Pumpenanschluss aktiviert werden. Wenn durch das Manometer erfasst wird, dass Druck in der Hydraulikleitung der Schmiereinheit aufgebaut wird, dann kann die Überprüfung der Pumpe abgeschlossen werden. Wenn dies jedoch nicht der Fall ist, dann muss überprüft werden, ob Luft in dem Vorratsbehälter für das Schmiermittel vorhanden ist. Wenn Luft in dem Vorratsbehälter vorhanden ist, dann ist der Vorratsbehälter zu entlüften. Wenn dies nicht der Fall ist, dann ist der Magnetschalter des Wegeventils zu prüfen. Wenn der Magnetschalter nicht in Ordnung ist, dann ist das Ventil zu tauschen. Wenn der Magnetschalter in Ordnung ist, dann wird überprüft, ob der Motor der Pumpe läuft. Wenn dies nicht der Fall ist, dann ist der Motor auszutauschen. Wenn dies der Fall ist, dann werden die Pumpenelemente überprüft. Wenn diese nicht in Ordnung sind, sind sie auszutauschen. Wenn sie jedoch in Ordnung sind, dann kann überprüft werden, ob eine Störmeldung vorhanden ist. Wenn dies der Fall ist, dann muss das System überprüft werden. Wenn keine Störmeldung vorhanden ist, dann ist die Überprüfung des Druckes beendet.

Die Steuerkontrolle erfolgt durch Überprüfung, ob Druck in der Schmiereinheit aufgebaut wird. Wenn dies der Fall ist, dann wird die Überprüfung beendet. Wenn dies jedoch nicht der Fall ist, dann sind die Leitungen und Schläuche zu ersetzen bzw. korrekt zu montieren. Wenn die Leitungen und Schläuche dicht sind, dann kann der Fettkolbenverteiler überprüft werden. Wenn dieser nicht in Ordnung ist, dann ist der Fettkolbenverteiler auszutauschen. Wenn er in Ordnung ist und keine Störmeldung vorhanden ist, dann wird die Systemüberprüfung beendet. Wenn jedoch eine Störmeldung vorhanden ist, dann erfolgt eine Kontrolle der elektrischen Komponenten.

Bei der Überprüfung der elektrischen Komponente wird geprüft, ob Druck aufgebaut wird. Wenn dies der Fall ist, dann wird die Überprüfung beendet. Wenn dies nicht der Fall ist, dann wird überprüft, ob der Druckschalter verharzt ist. Wenn dies der Fall ist, dann wird der Druckschalter gereinigt. Wenn dies nicht der Fall ist, dann wird überprüft, ob der Druckschalter defekt ist. Wenn er defekt ist, dann ist er auszutauschen. Wenn der Druckschalter nicht defekt ist, dann wird die Spannungsversorgung der Pumpe überprüft. Falls diese nicht in Ordnung ist, dann können die Komponenten der Spannungsversorgung (Platine, Stecker oder Kabel) getauscht oder überprüft werden. Wenn diese jedoch in Ordnung sind, dann wird die Spannungsversorgung für das Ventil geprüft. Wenn die Spannungsversorgung nicht in Ordnung ist, dann sind Stecker oder Kabel zu tauschen. Wenn die Spannungsversorgung in Ordnung ist und keine weitere Störmeldung vorhanden ist, dann wird die Überprüfung beendet. Wenn jedoch eine Störmeldung vorhanden ist, dann muss die Schmiereinheit weiter überprüft werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt ein schematisches Blockschaltbild eines Testgerätes und einer Schmiereinheit,
- Fig. 3: zeigt eine schematische Darstellung eines Testgerätes,
- Fig. 4A: zeigt ein Flussablaufdiagramm einer Drucküberprüfung,
- Fig. 4B: zeigt ein Flussablaufdiagramm einer Systemüberprüfung, und
- Fig. 4C: zeigt ein Flussablaufdiagramm einer Überprüfung von elektrischen Komponenten.

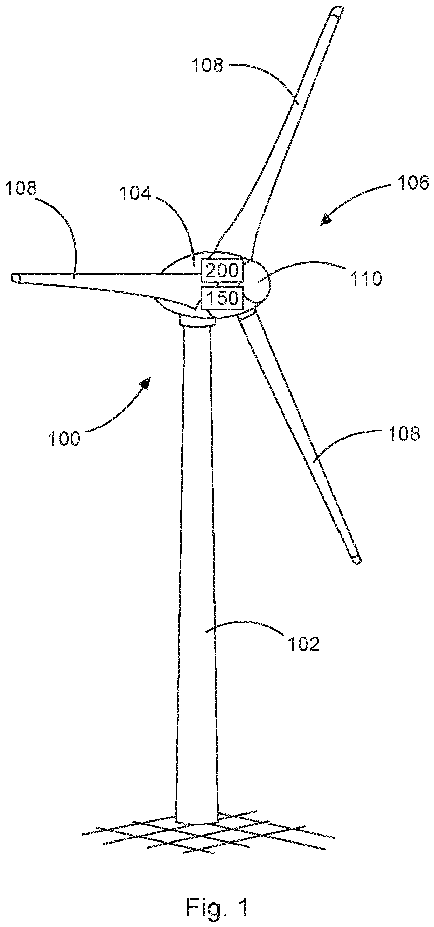

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Die Windenergieanlage 100 weist mindestens eine zu schmierende Komponente 150 (z. B. ein Lager oder ein Getriebe) auf.

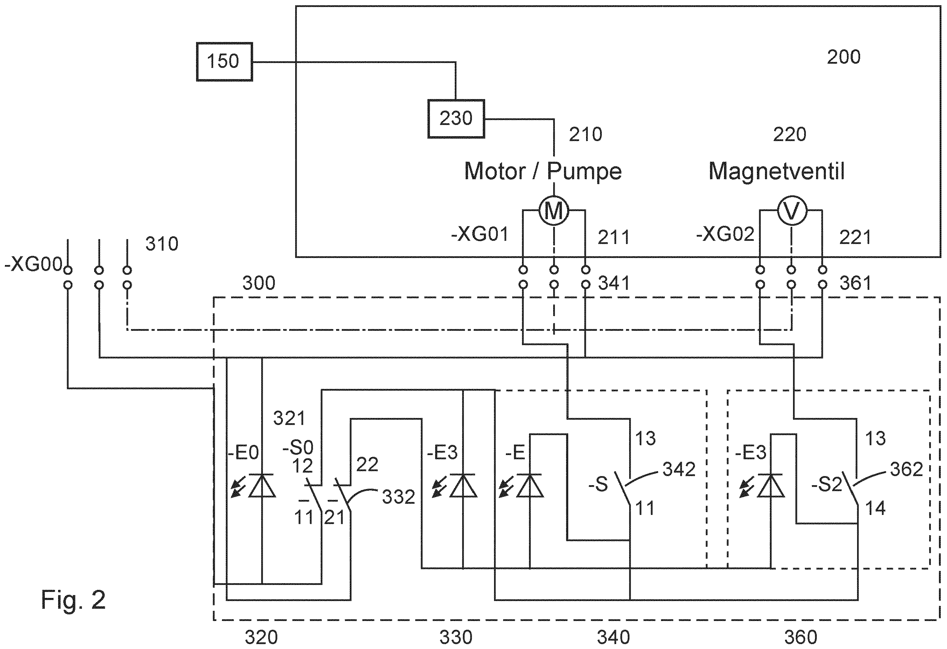

Fig. 2 zeigt ein schematisches Blockschaltbild eines Testgerätes und einer Schmiereinheit. In Fig. 2 ist ein Schaltplan eines Testgerätes sowie ein Blockschaltbild einer Schmiereinheit dargestellt. Das Testgerät 300 weist einen Anschluss 310 für eine Energieversorgung, einen Pumpenanschluss 341 und einen Ventilanschluss 361 auf. Das Testgerät 300 weist einen Spannungsabschnitt 320, einen Betriebsabschnitt 330, einen Pumpenabschnitt 340 und einen Ventilabschnitt 360 auf. Insbesondere weist das Testgerät einen Schalter 321 als Not-Aus bzw. zum Aktivieren der Spannungsversorgung auf. Ferner ist ein Pumpenschalter 342 und ein Ventilschalter 362 vorgesehen. Mittels dieser Schalter 342, 362 können der Pumpenanschluss 341 und der Ventilanschluss 361 mit Spannung versorgt werden.

Eine Schmiereinheit 200 dient zur Schmierung einer zu schmierenden Komponente 150. Die Schmiereinheit weist eine Pumpe 210, ein Ventil 220 und ein Reservoir 230 auf. Die Schmiereinheit weist einen Pumpenanschluss 211 und einen Ventilanschluss 221 auf.

Zur Überprüfung der Schmiereinheit wird das Testgerät 300 vorgesehen und der Pumpenanschluss 341 des Testgerätes 300 wird mit der Pumpe 210 gekoppelt und der Ventilanschluss 361 des Testgerätes 300 wird mit dem Ventil 220 gekoppelt. Somit kann der Betrieb der Pumpe 210 und des Ventils 220 durch das Testgerät 300 gesteuert werden. Durch das Testgerät 300 kann insbesondere eine Testbetriebsart aktiviert werden, bei welcher der Betrieb der Schmiereinheit 200 überprüft werden kann.

In der Testbetriebsart kann ein Manometer in oder an der Schmierhydraulikleitung vorgesehen sein.

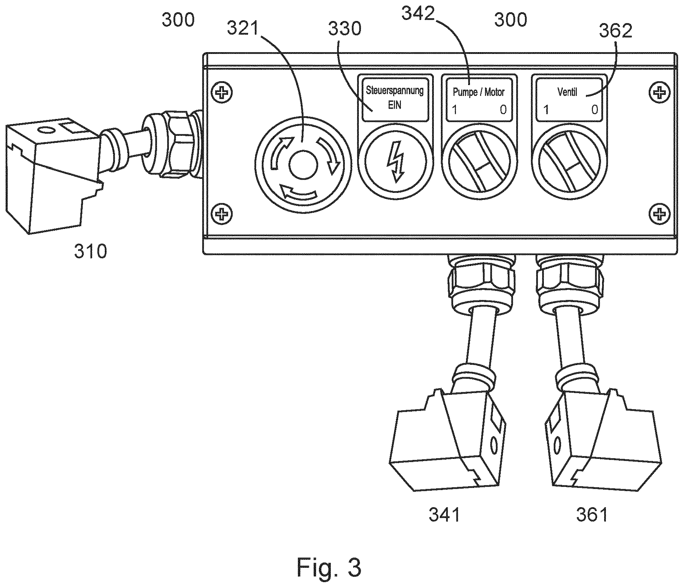

Fig. 3 zeigt eine schematische Darstellung eines Testgerätes. Das Testgerät 300 weist einen ersten, zweiten und dritten Schalter 321, 342, 362 auf. Des Weiteren weist das Steuergerät eine Anschlussmöglichkeit 310 zur Stromversorgung, einen Pumpenanschluss 341 und einen Ventilanschluss 361 auf. Während des Testbetriebes wird der Pumpenanschluss 341 an eine Pumpe der Schmiereinheit angeschlossen. Ferner wird der Ventilanschluss 361 an ein Ventil der Schmiereinheit angeschlossen. Damit kann das Testgerät sowohl die Pumpe als auch die Schmiereinheit während des Testbetriebes unabhängig steuern.

Durch den zweiten Schalter 342 kann der Pumpenanschluss 341 mit Spannung versorgt werden, so dass eine daran angeschlossene Pumpe 210 aktiviert werden kann. Durch den dritten Schalter 362 kann bei seiner Betätigung eine Spannung an dem Ventilanschluss 361 angelegt werden, so dass ein daran angeschlossenes Ventil 220 aktiviert werden kann.

Das Testgerät 300 ist mobil ausgestaltet, so dass das Testgerät zur Überprüfung einer Schmiereinheit in einer Windenergieanlage verwendet werden kann. Aufgrund der Mobilität des Testgerätes muss die Schmiereinheit nicht aus der Windenergieanlage ausgebaut werden, um deren Funktionsweise überprüfen zu können. Vielmehr wird das Testgerät an die zu prüfende Schmiereinheit innerhalb der Windenergieanlage angeschlossen und der Testbetrieb kann gestartet werden.

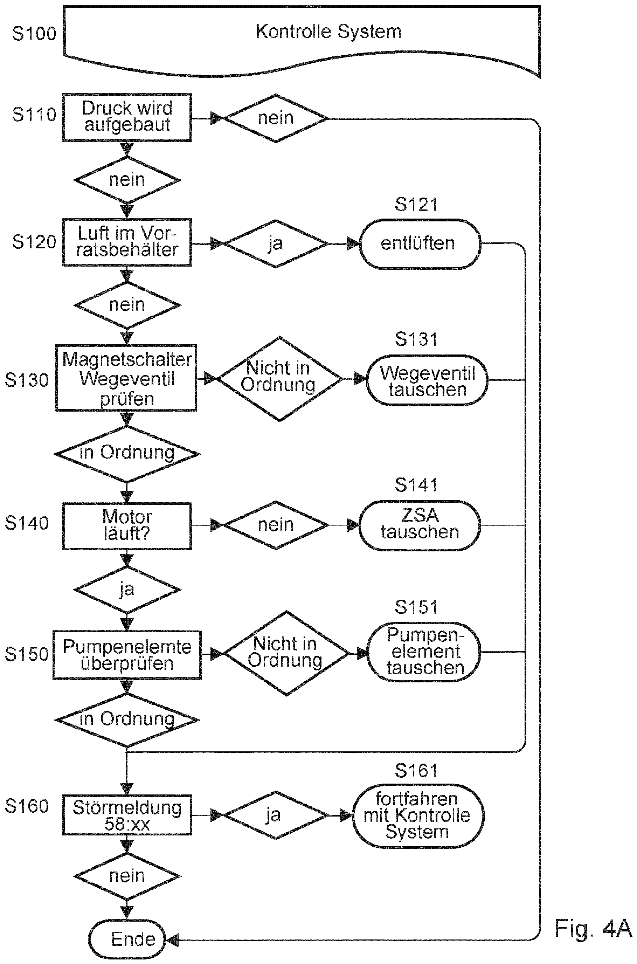

In Figur 4A ist ein Flussablaufdiagramm zur Drucküberprüfung vorgesehen. Die Drucküberprüfung wird in Schritt S100 eingeleitet, indem das Testgerät an die Pumpeneinheit und die Ventileinheit angeschlossen wird. In Schritt S110 wird überprüft, ob ein Druck in der Hydraulikleitung der Schmiereinheit aufgebaut wird. Wenn dies der Fall ist, dann wird die Überprüfung des Druckes beendet. Wenn dies nicht der Fall ist, schreitet der Fluss zu Schritt S120 vorwärts, wo geprüft wird, ob Luft im Vorratsbehälter bzw. im Speicher vorhanden ist. Wenn dies der Fall ist, dann wird in Schritt S121 der Vorratsbehälter entlüftet. Wenn dies nicht der Fall ist, dann schreitet der Fluss zu Schritt S130 voran, wo der Magnetschalter des Ventils überprüft wird. Wenn der Magnetschalter nicht in Ordnung ist, dann ist das Ventil in Schritt S131 zu tauschen. Wenn der Magnetschalter in Ordnung ist, dann schreitet der Fluss zu Schritt S140, wo überprüft wird, ob der Motor läuft. Wenn dies nicht der Fall ist, dann ist der Motor in Schritt S141 auszutauschen. Wenn der Motor jedoch läuft, dann schreitet der Fluss zu Schritt S150 voran, wo Pumpenelemente überprüft werden. Wenn die Pumpenelemente nicht in Ordnung sind, dann sind sie in Schritt S151 zu tauschen. Ansonsten schreitet der Fluss weiter zu Schritt S160, wo überprüft wird, ob eine weitere Störungsmeldung vorhanden ist. Wenn dies nicht der Fall ist, dann wird die Drucküberprüfung beendet. Wenn dies jedoch der Fall ist, dann wird in Schritt S161 eine Systemüberprüfung durchgeführt.

Alternativ kann zur Überprüfung der Schmiereinheit eine Überprüfung des Anschaltdrucks durchgeführt werden. Hierbei kann die Pumpe der Schmiereinheit an dem Pumpenanschluss des Testgerätes angeschlossen werden. Anschließend kann die Pumpe über den Pumpenanschluss aktiviert werden. Es wird überprüft, ob der Motor der Pumpe läuft. Wenn dies nicht der Fall ist, dann ist der Motor bzw. die Pumpe auszutauschen. Wenn dies jedoch der Fall ist, dann werden die Pumpenelemente überprüft. Wenn diese nicht in Ordnung sind, sind sie auszutauschen. Wenn durch das Manometer erfasst wird, dass Druck in der Schmierleitung der Schmiereinheit aufgebaut wird, dann kann die Überprüfung der Pumpe abgeschlossen werden. Wenn dies jedoch nicht der Fall ist, dann muss überprüft werden, ob Luft in dem Vorratsbehälter für das Schmiermittel vorhanden ist. Wenn Luft in dem Vorratsbehälter vorhanden ist, dann ist der Vorratsbehälter zu entlüften. Wenn dies nicht der Fall ist, dann ist der Magnetschalter des Wegeventils zu prüfen. Wenn der Magnetschalter nicht in Ordnung ist, dann ist das Ventil zu tauschen. Wenn sie jedoch in Ordnung sind, dann kann überprüft werden, ob eine Störmeldung vorhanden ist. Wenn dies der Fall ist, dann muss das System überprüft werden. Wenn keine Störmeldung vorhanden ist, dann ist die Überprüfung des Druckes beendet.

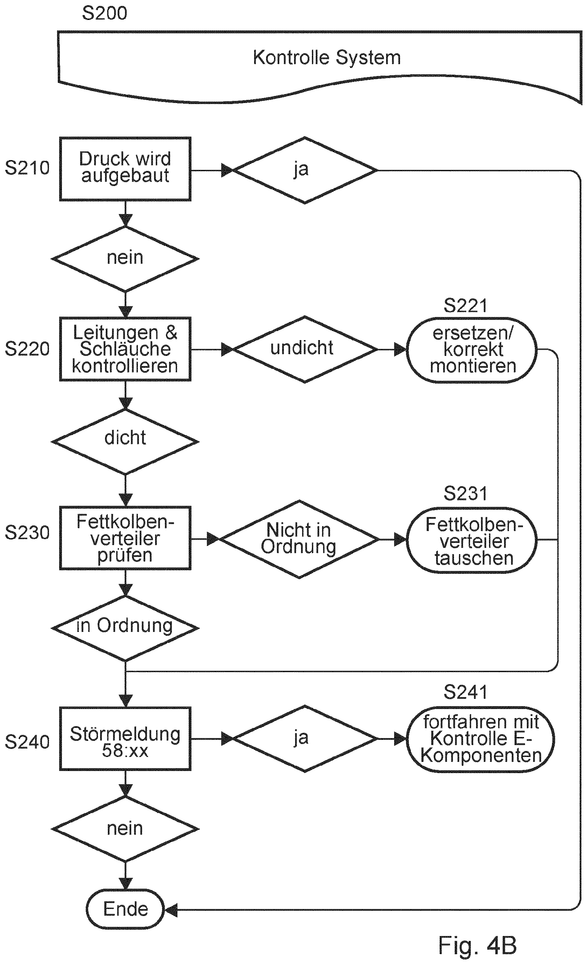

Fig. 4B zeigt ein Flussablaufdiagramm zur Systemüberprüfung. In Schritt S200 wird die Systemüberprüfung durchgeführt. In Schritt S210 wird überprüft, ob Druck in der Schmiereinheit aufgebaut wird. Wenn dies der Fall ist, dann wird die Systemüberprüfung beendet. Wenn dies jedoch nicht der Fall ist, dann schreitet der Fluss weiter zu Schritt S220, wo Leitungen und Schläuche kontrolliert werden. Wenn diese undicht sind, dann sind sie in Schritt S221 zu ersetzen. Wenn sie jedoch dicht sind, dann schreitet der Fluss weiter zu Schritt S230, wo der Fettkolbenzylinder überprüft wird. Wenn dieser nicht in Ordnung ist, dann wird er in Schritt S231 ausgetauscht. Wenn er jedoch in Ordnung ist, dann schreitet der Fluss weiter zu Schritt S240. In Schritt S240 wird überprüft, ob weitere Störmeldungen vorhanden sind. Wenn dies nicht der Fall ist, dann wird die Systemüberprüfung beendet. Wenn dies jedoch der Fall ist, dann wird in Schritt S241 eine Überprüfung der elektrischen Komponenten initiiert.

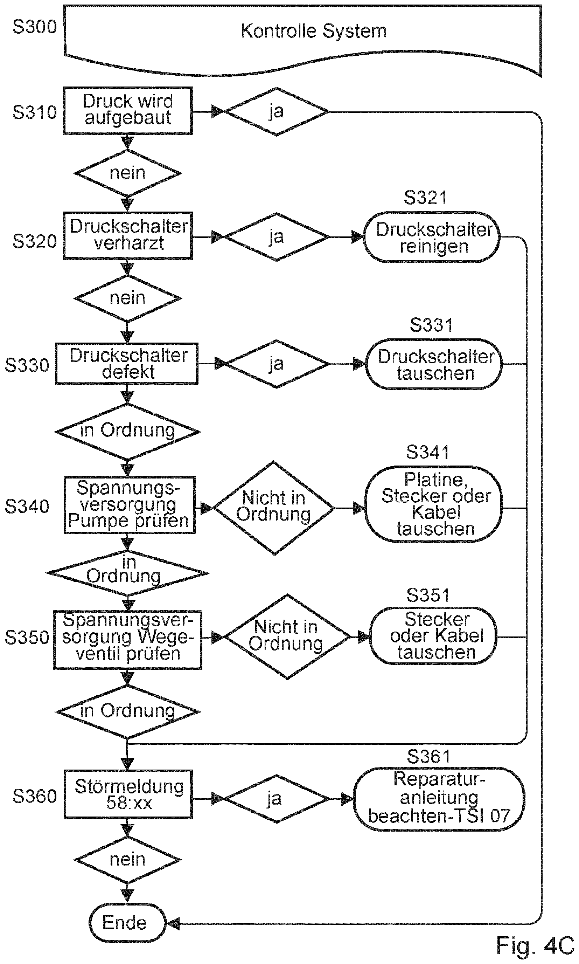

Fig. 4C zeigt ein Flussablaufdiagramm einer Überprüfung der elektrischen Komponente. In Schritt S300 erfolgt eine Überprüfung der elektrischen Komponenten. In Schritt S310 wird überprüft, ob Druck in der Schmiereinheit aufgebaut wird. Wenn dies der Fall ist, dann wird die Überprüfung beendet. Wenn dies nicht der Fall ist, dann schreitet der Fluss weiter zu Schritt 320, wo überprüft wird, ob der Druckschalter verharzt ist. Wenn dies der Fall ist, dann wird der Druckschalter in Schritt S321 gereinigt. Wenn dies nicht der Fall ist, dann schreitet der Fluss weiter zu Schritt S320. Hier wird überprüft, ob der Druckschalter defekt ist. Wenn dies der Fall ist, dann ist der Druckschalter in Schritt S331 zu tauschen. Wenn dies jedoch nicht der Fall ist, dann schreitet der Fluss weiter zu Schritt S340, wo die Spannungsversorgung der Pumpe überprüft wird. Wenn dies nicht der Fall ist, dann werden die defekten Komponenten in Schritt S341 ausgetauscht. Wenn die Spannungsversorgung der Pumpe jedoch in Ordnung ist, dann schreitet der Fluss weiter zu Schritt S350, wo die Spannungsversorgung für das Ventil geprüft wird. Wenn dies nicht in Ordnung ist, dann wird in Schritt S351 ein Kabel oder ein Stecker getauscht. Wenn die Spannungsversorgung jedoch in Ordnung ist, dann schreitet der Fluss weiter zu Schritt S360, wo überprüft wird, ob eine weitere Störmeldung vorhanden ist. Wenn dies nicht der Fall ist, dann wird die Überprüfung der elektrischen Komponenten beendet. Wenn jedoch eine Störmeldung vorhanden ist, dann schreitet der Fluss weiter zu Schritt S361, wo eine weitere Überprüfung stattfinden kann.

Das Testgerät kann eine Bedieneinheit aufweisen, mittels welcher der Anwender das Prüfverfahren steuern kann. Mittels der Bedieneinheit kann der Anwender die Pumpe ein- und ausschalten und/oder die Ventileinheit ein- oder ausschalten. Mittels des Prüfverfahrens soll eine genaue Lokalisierung der defekten Bauteile oder Baugruppen innerhalb der Schmiereinheit ermöglicht werden. Optional kann ein Manometer und ein Druckbegrenzungsventil an die Schmiereinheit angeschlossen werden. Zur Überprüfung der Schmiereinheit kann zunächst die Schmierpumpe überprüft werden. Anschließend kann der Druckschalter durch Abfrageauslösung in der Anlagensteuerung überprüft werden. Falls bis hierhin kein Fehler festgestellt werden konnte, dann werden schrittweise die anderen Komponenten der Schmiereinheit bzw. des Schmierkreislaufes untersucht und mittels des Testgerätes zeitlich unabhängig bedient. Das Testgerät ist vorteilhaft, weil zur Überprüfung der Schmiereinheit keine Elektrofachkraft benötigt wird. Mittels des Testgerätes kann insbesondere eine Zentralschmieranlage der Windenergieanlage überprüft werden. Mit dem Testgerät wird eine effiziente, kostenoptimierte und präzise Fehlerdiagnose der zentralen Schmiereinheit erreicht, ohne dass die Schmiereinheit ausgebaut oder demontiert werden muss. Aufgrund der kompakten Ausgestaltung des Testgerätes kann eine Überprüfung der Schmiereinheiten der Windenergieanlage vor Ort erfolgen, ohne dass die Schmiereinheiten hierfür ausgebaut oder demontiert werden müssen.

Ferner kann durch die vorgeschriebene Vorgehensweise eine Standardisierung von Fehlerbehebungen und eine Vermeidung von unnötigen Ressourcen (Austausch, Transport, Ersatzbeschaffung) realisiert werden.

Mit dem mobilen Testgerät ist es möglich, eine Steuerung von Komponenten einer Schmiereinheit wie beispielsweise die Pumpe und ein Ventil, zu übernehmen, um eine Überprüfung der Schmiereinheit bzw. eine Überprüfung der Funktionsfähigkeit der Schmiereinheit zu ermöglichen.

Zur Inbetriebnahme des Testgerätes kann der Hauptschalter an einem Steuerschalter der Windenergieanlage ausgeschaltet werden. Die Stecker der Schmiereinheiten, welche mit der Pumpe und dem Wegeventil gekoppelt sind, können entfernt werden und mit dem Testgerät gekoppelt werden. Anschließend kann der Hauptschalter des Steuerschrankes wieder eingeschaltet werden und die Überprüfung kann durchgeführt werden.

Zur Überprüfung der Schmiereinheit kann ein (externes) Manometer beispielsweise am Ausgang des Wegeventils vorgesehen werden, um den Druck innerhalb der Schmiereinheit überprüfen zu können.

## Patentansprüche

1. Verfahren zur Überprüfung einer Schmiereinheit (200) in einer Windenergieanlage (100), wobei die Windenergieanlage (100) mindestens eine zu schmierende Komponente (150) und eine Schmiereinheit (200) zum Schmieren der zu schmierenden Komponente (150) aufweist, wobei die Schmiereinheit (200) eine Pumpe (210) und ein Ventil (220) aufweist, mit den Schritten
Vorsehen eines Testgerätes (300) mit einem Pumpenanschluss (341) für die Pumpe (210) und einem Ventilanschluss (361) für das Ventil (220),
Anschließen des Pumpenanschlusses (341) an die Pumpe (210) zur Steuerung der Pumpe (210) durch das Testgerät (300),
Anschließen des Ventilanschlusses (361) an das Ventil (220) zur Steuerung des Ventils (220) durch das Testgerät (300), und
Steuern der Pumpe (210) und/oder des Ventils (220) mittels des Testgerätes (300) zur Überprüfung der Schmiereinheit (200).

2. Verfahren nach Anspruch 1, wobei
das Testgerät (300) mindestens zwei Betätigungselemente (342, 362) zur Steuerung des Pumpenanschlusses (341) oder des Ventilanschlusses (361) aufweist.

3. Verfahren nach Anspruch 1 oder 2, wobei zur Drucküberprüfung folgende Schritte durchgeführt werden:
- Überprüfen, ob Druck in der Schmiereinheit (200) vorhanden ist (Schritt 210),
- Überprüfen, ob Luft in einem Vorratsbehälter der Schmiereinheit (200) vorhanden ist (Schritt S120),
- Überprüfen eines Magnetschalters eines Ventils (Schritt S130),
- Überprüfen einer Funktion eines Motors der Pumpe (Schritt S140),
- Überprüfen von Pumpenelementen der Pumpe (Schritt S150), und
- Überprüfen, ob Störmeldungen vorhanden sind (Schritt S160).

4. Verfahren nach einem der vorherigen Ansprüche, wobei eine Systemüberprüfung durch die folgenden Schritte durchgeführt wird:
- Überprüfen, ob Druck in der Schmiereinheit vorhanden ist (Schritt S210),
- Überprüfen von Leitungen und/oder Schläuchen der Schmiereinheit (200) (Schritt S220),
- Überprüfen eines Fettkolbenverteilers der Schmiereinheit (200) (Schritt S230),
- Überprüfen, ob Störmeldungen vorhanden sind (Schritt S240).

5. Verfahren nach einem der vorherigen Ansprüche, wobei elektronische Komponenten wie folgt überprüft werden:
- Überprüfen, ob Druck in der Schmiereinheit (200) vorhanden ist (Schritt S310),
- Überprüfen, ob ein Druckschalter verharzt ist, wenn kein Druck aufgebaut wird (Schritt S320),
- Überprüfen, ob ein Druckschalter defekt ist (Schritt S330),
- Überprüfen, ob die Spannungsversorgung der Pumpe gewährleistet ist (Schritt S340),
- Überprüfen, ob die Spannungsversorgung für das Ventil gewährleistet ist (Schritt S350), und
- Überprüfen, ob weitere Störmeldungen vorhanden sind (Schritt S360).

6. Schmiereinheit-Prüfgerät (300), mit
einem ersten Anschluss (310) zur Stromversorgung,
einem zweiten Anschluss (341) zum Anschließen einer Pumpe (210) an die Schmiereinheit (300), und
einem dritten Anschluss (361) zum Anschließen eines Ventils (220) der Schmiereinheit (300),
einem ersten Schalter (321) zum Ein- und Ausschalten des Prüfgerätes (300),
einem zweiten Schalter (342) zum Ansteuern des zweiten Anschlusses (341), und
einem dritten Schalter (362) zum Ansteuern des dritten Anschlusses (361).
